# EUROPEAN PATENT APPLICATION

(11) **EP 4 181 543 A1**
(43) Date of publication of application: **17.05.2023**
(21) Application number: 21852212.6
(22) Date of filing: 30.07.2021
(51) Int. Cl.: H04W 4/44

(54) **ELECTRONIC DEVICE AND METHOD FOR WIRELESS COMMUNICATIONS, AND COMPUTER READABLE STORAGE MEDIUM**

(30) Priority: 06.08.2020 CN 202010782903
(71) Applicant: Sony Group Corporation, Minato-Ku, Tokyo, 108-0075 (JP)
(72) Inventor: SUN, Chen, Beijing 100028 (CN); CUI, Tao, Beijing 100028 (CN)
(74) Representative: D Young & Co LLP
(86) International application number: PCT/CN2021/109423
(87) International publication number: WO 2022/028314

(57) **Abstract**

Provided are an electronic device and a method for wireless communications, and a computer readable storage medium. The electronic device for wireless communications comprises a processing circuit. The processing circuit is configured to obtain, in a manner of an active request or a passive response, situation sensing information of a surrounding situation of the electronic device sensed by at least one sensing electronic device.

## Description

### TECHNICAL FIELD

The present disclosure relates to the field of wireless communication technology, in particular to the method of obtaining condition sensing information and the integration of the obtained condition sensing information. More specifically, the present disclosure relates to an electronic apparatus and method for wireless communications and a computer readable storage medium.

### BACKGROUND

The autonomous vehicle detects other traffic participants around it through its own sensing devices (such as a camera, radar and other sensors), processes the detected sensing information, and sends it to another vehicle around the autonomous vehicle through vehicle networking (V2X, information exchange between a vehicle and the outside world). Another vehicle receiving the information senses the traffic participants outside the vision of the autonomous vehicle in advance to assist the autonomous vehicle in make correct driving decisions, thereby reducing traffic accidents and secondary injuries and improving driving safety or traffic efficiency.

How the autonomous vehicle obtains the sensing information is not specified in the existing standards. In addition, how to reduce the bandwidth and overall delay of autonomous vehicle when receiving the sensing information is a research hotspot.

### SUMMARY OF THE INVENTION

In the following, an overview of the present disclosure is given simply to provide basic understanding to some aspects of the present disclosure. It should be understood that this summary is not an exhaustive overview of the present disclosure. It is not intended to define key part or important part of the present disclosure, or limit a scope of the present disclosure. The purpose is only to give some concepts in a simplified form, as a preface of the subsequent detailed descriptions.

According to an aspect of the present disclosure, an electronic apparatus for wireless communications is provided. The electronic apparatus includes processing circuitry. The processing circuitry is configured to obtain, in a manner of an active request or a passive response, condition sensing information about a surrounding condition of the electronic apparatus that is sensed by at least one sensing electronic device.

According to another aspect of the present disclosure, an electronic apparatus for wireless communications is provided. The electronic apparatus includes processing circuitry. The processing circuitry is configured to take condition sensing information about a surrounding condition of the electronic apparatus that is obtained by an acquisition device as reference sensing information, and in a case that the reference sensing information does not meet a requirement of the electronic apparatus for predetermined condition sensing information, communicate, based on the requirement, with at least one sensing electric device capable of sensing the predetermined condition sensing information, to obtain the predetermined condition sensing information; and integrate the obtained predetermined condition sensing information with the reference sensing information to obtain integrated condition sensing information, where the integrated condition sensing information meets the requirement of the electronic apparatus for the predetermined condition sensing information.

According to another aspect of the present disclosure, a method for wireless communications is provided. The method includes: obtaining, in a manner of an active request or a passive response, condition sensing information about a surrounding condition of the electronic apparatus that is sensed by at least one sensing electronic devices.

According to another aspect of the present disclosure, a method for wireless communications is provided. The method includes: taking condition sensing information about a surrounding condition of an electronic apparatus that is obtained by an acquisition device as reference sensing information, and in a case that the reference sensing information does not meet a requirement of the electronic apparatus for predetermined condition sensing information, communicating, based on the requirement, with at least one sensing electric device capable of sensing the predetermined condition sensing information, to obtain the predetermined condition sensing information; integrating the obtained predetermined condition sensing information with the reference sensing information to obtain integrated condition sensing information, wherein the integrated condition sensing information meets the requirement of the electronic apparatus for the predetermined condition sensing information.

According to other aspects of the present disclosure, a computer program code and a computer program product for performing the method for wireless communications, and a computer-readable storage medium recording thereon the computer program code for performing the method for wireless communications are further provided.

These and other advantages of the present disclosure will be more apparent from the following detailed description of preferred embodiments of the present disclosure in conjunction with the accompanying drawings.

### BRIEF DESCRIPTION OF THE DRAWINGS

In order to further illustrate the above and other advantages and features of the present disclosure, the detailed description of embodiments of the present disclosure will be further described in detail in combination with the drawings. The accompanying drawings, together with the detailed description below, are incorporated into and form a part of the specification. Elements having the same function and structure are denoted by the same reference numerals. It should be noted that the accompanying drawings only illustrate, by way of example, typical embodiments of the present invention and should not be construed as a limitation to the scope of the invention. In the accompanying drawings:
Figure 1 shows a block diagram of functional modules of an electronic apparatus for wireless communications according to an embodiment of the present disclosure;
Figure 2 is a flowchart showing information interaction among an electronic apparatus, a V2X server and a sensing electronic device according to an embodiment of the present disclosure;
Figures 3A-3C are schematic diagrams showing the interaction among an electronic apparatus, a V2X server and a sensing electronic device according to an embodiment of the present disclosure;
Figure 4 is another flowchart showing information interaction among an electronic apparatus, a V2X server and a sensing electronic device according to an embodiment of the present disclosure;
Figures 5A-5C are another schematic diagrams showing interaction among an electronic apparatus, a V2X server, and a sensing electronic device according to an embodiment of the present disclosure;
Figure 6 is a schematic diagram showing an electronic apparatus broadcasting a sensing sharing request to a sensing electronic device according to an embodiment of the present disclosure;
Figure 7 is a schematic diagram showing a connection between an electronic apparatus and a sensing electronic device that receives a request broadcasted by the electronic apparatus according to an embodiment of the present disclosure;
Figure 8 is a flowchart showing information interaction between an electronic apparatus and multiple sensing electronic devices according to an embodiment of the present disclosure;
Figure 9 is a schematic diagram showing an electronic apparatus obtaining predetermined condition sensing information according to an embodiment of the present disclosure;
Figure 10 is a schematic diagram showing an electronic apparatus obtaining condition sensing information from a sensing electronic device through passive response according to an embodiment of the present disclosure;
Figure 11 is another schematic diagram showing an electronic apparatus obtaining condition sensing information from a sensing electronic device through passive response according to an embodiment of the present disclosure;
Figure 12 is another schematic diagram showing an electronic apparatus obtaining predetermined condition sensing information according to an embodiment of the present disclosure;
Figure 13 is still another schematic diagram showing an electronic apparatus obtaining predetermined condition sensing information according to an embodiment of the present disclosure;
Figure 14 shows a block diagram of functional modules of an electronic apparatus for wireless communications according to another embodiment of the present disclosure;
Figure 15 shows a block diagram of functional modules of an electronic apparatus for wireless communications according to another embodiment of the present disclosure;
Figure 16 shows a block diagram of functional modules of an electronic apparatus for wireless communications according to another embodiment of the present disclosure;
Figure 17 is a flowchart showing information interaction of an electronic apparatus obtaining predetermined condition sensing information from a sensing electronic device in a case that the sensing electronic device is capable of broadcasting its sensing capability;
Figure 18 is a flowchart showing information interaction of an electronic apparatus obtaining predetermined condition sensing information from a sensing electronic device in a case that the sensing electronic device is incapable of broadcasting its sensing capability;
Figure 19 shows a flowchart of a method for wireless communications according to an embodiment of the present disclosure;
Figure 20 shows a flowchart of a method for wireless communications according to another embodiment of the present disclosure;
Figure 21 is a block diagram showing a first example of a schematic configuration of eNB or gNB to which the technology according to the present disclosure may be applied;
Figure 22 is a block diagram showing a second example of a schematic configuration of eNB or gNB to which the technology according to the present disclosure may be applied;
Figure 23 is a block diagram showing an example of a schematic configuration of a smart phone to which the technology according to the present disclosure may be applied;
Figure 24 is a block diagram showing an example of a schematic configuration of an automobile navigation device to which the technology according to the present disclosure may be applied; and
Figure 25 is a block diagram of an exemplary structure of a general purpose personal computer for implementing a method and/or apparatus and/or system according to an embodiment of the present disclosure.

### DETAILED DESCRIPTION OF THE EMBODIMENTS

Exemplary embodiments of the present disclosure are described hereinafter in conjunction with the drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should further be noted that in order to avoid obscuring the present disclosure due to unnecessary details, only an device structure and/or processing steps closely related to the solution according to the present disclosure are illustrated in the accompanying drawing, and other details having little relationship to the present disclosure are omitted.

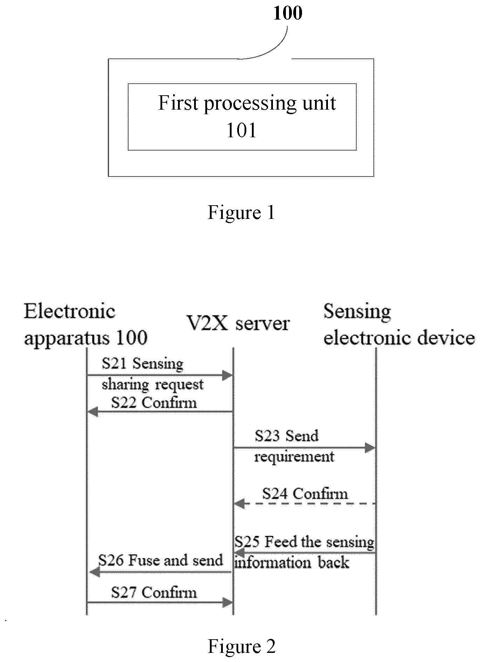

Figure 1 shows a block diagram of functional modules of an electronic apparatus for wireless communications according to an embodiment of the present disclosure. As shown in Figure 1, the electronic apparatus 100 includes a first processing unit 101. The first processing unit 101 is configured to obtain condition sensing information about a surrounding condition of the electronic apparatus 100 that is sensed by at least one sensing electronic device in a manner of an active request or a passive response.

The first processing unit 101 may be implemented by one or more processing circuits, and the processing circuits may be implemented as a chip for example.

The electronic apparatus 100, for example, may be arranged on a user equipment side or may be communicatively connected to a user equipment. Here, it should be noted that the electronic apparatus 100 may be implemented in a chip level or in an apparatus level. For example, the electronic apparatus 100 may function as a user equipment, and may include an external device such as a memory and a transceiver (not shown in Figure 1). The memory may be configured to store programs required for performing various functions by the user equipment and related data information. The transceiver may include one or more communication interfaces to support communication with different devices (such as a base station, and other user equipment). Implementation of the transceiver is not particularly limited here.

As an example, the electronic apparatus 100 may be any electronic apparatus that may obtain condition sensing information in a manner of an active request or a passive response.

As an example, the condition sensing information is information about the surrounding condition of the electronic apparatus 100. For example, the condition sensing information may be information about other traffic participants (including but not limited to a target object such as a vehicle, a pedestrian, a cyclist, other road traffic elements) around the electronic apparatus 100, information about the temperature around the electronic apparatus 100, information about the humidity around the electronic apparatus 100, and so on.

As an example, the sensing electronic device is any device capable of sensing and transferring the condition sensing information. For example, the sensing electronic device may be a device capable of sensing and transferring other traffic participants around the electronic apparatus 100, a device capable of sensing and transferring the temperature around the electronic apparatus 100, a device capable of sensing and transferring the humidity around the electronic apparatus 100, and so on.

In the following, the request issued by the electronic apparatus 100 is sometimes referred to as a sensing sharing request.

As an example, in a V2X (information exchange between a vehicle and the outside world, Internet of Vehicles) scenario, the electronic apparatus 100 may include an on-board electronic apparatus. For example, the electronic apparatus 100 may be arranged on a vehicle (such as an autonomous vehicle). For example, the electronic apparatus 100 may be a vehicle navigation device. In the following, for convenience, the description is made by taking the electronic apparatus 100 as the on-board electronic apparatus. As an example, the sensing electronic device may include an on-board electronic device and a roadside device (RSU), as well as a vulnerable road group (VRU). For example, the vulnerable road group may not only include a pedestrian near the electronic apparatus 100 who carries an electron device capable of sensing and transferring condition sensing information, but also include a bicycle, an electric bicycle, a balance car, a scooter, etc. that have the ability to sense and transfer condition sensing information. In the following, unless specifically stated, the pedestrian refers to a person who carries the electron device capable of sensing and transferring condition sensing information. For example, the electronic apparatus 100 may obtain traffic condition data that is not within the sensing range of the electronic apparatus 100 (for example, the traffic condition data in a blind area of the electronic apparatus 100) from the sensing electronic device.

For example, in a case that the sensing electronic device is the roadside device, the roadside device may detect the type, size, position, motion state and other information of a target object near the roadside device and current road vehicle position information of the electronic apparatus 100 through a local sensor (a camera, radar, a communication device, etc.). The roadside device may send the detected type, attribute, position, motion state and other information of the target object to the electronic apparatus 100 through wireless communications. After receiving the condition sensing information shared by the roadside device, the electronic apparatus 100 determines what countermeasures should be taken according to the position relationship and motion state relationship between the electronic apparatus 100 itself and the target object.

In a case that the sensing electronic device is the on-board electronic device around the electronic apparatus 100, the sensing electronic device may detect the type, size, position, motion state and other information of the target object around the sensing electronic device through an on-board sensor, and may send the detected type, attribute, position, motion state and other information of the target object to the electronic apparatus 100. After receiving the condition sensing information, the electronic apparatus 100 determines what countermeasures should be taken according to the position relationship and motion state relationship between the electronic apparatus 100 itself and the target object.

The electronic apparatus 100 according to the embodiment of the present disclosure may obtain the condition sensing information in a manner of an active request or a passive response, so as to assist the electronic apparatus 100 itself in making certain decisions based on the obtained condition sensing information. How the autonomous vehicle obtains the sensing information is not specified in the existing standards. In the V2X scenario, the electronic apparatus 100 according to the embodiment of the present disclosure may assist itself to make correct driving decisions based on the obtained condition sensing information, to improve driving safety or traffic efficiency.

As an example, the first processing unit 101 may be configured to send an active request to a V2X server that provides services for the first processing unit 101, and obtain the fusion sensing information obtained from the V2X server by fusing the condition sensing information fed back from at least one sensing electronic device. For example, the electronic apparatus 100 may send the active request to the V2X server periodically or aperiodically.

In addition, as an example, the first processing unit 101 may be configured to send the active request to a base station that provides services for the first processing unit 101, and obtain the fusion sensing information obtained from the base station by fusing the condition sensing information fed back from at least one sensing electronic device. For example, the electronic apparatus 100 may send the active request to the base station periodically or aperiodically. The following description is made with reference to the V2X server. The V2X server in the following description made with reference to the V2X server may be replaced with the base station.

The V2X server may be understood as an edge cloud. Compared with a controller at the vehicle end, the V2X server has higher computing power and reliability. Besides, because the V2X server is deployed on the roadside, the efficiency of information fusion processing may be improved, so as to achieve rapid signaling interaction and data sharing with lower delay.

It can be seen from the above description that since the V2X server fuses the condition sensing information fed back from at least one sensing electronic device, the power consumption and processing time of the electronic apparatus 100 may be reduced. In addition, the electronic apparatus 100 may receive the fusion sensing information more securely and reliably through the V2X server, and may obtain the fusion sensing information with lower delay.

As an example, the V2X server fusing the condition sensing information fed back from at least one sensing electronic device means that the V2X server only performs at least one of processes: simply summarizing the condition sensing information received from one or more sensing electronic devices among the at least one sensing electronic devices, classifying the condition sensing information, and removing the redundancy in the condition sensing information. Other examples of fusion processing may be conceived by those skilled in the art, which will not be described here.

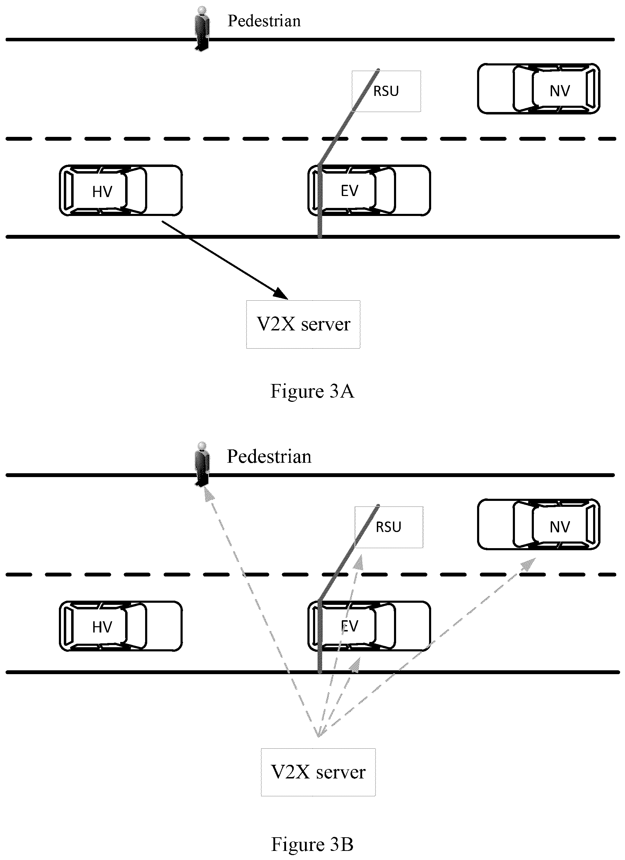

Figure 2 is a flowchart showing information interaction among an electronic apparatus 100, a V2X server, and a sensing electronic device according to an embodiment of the present disclosure. Figures 3A-3C are schematic diagrams showing the interaction among an electronic apparatus, a V2X server and a sensing electronic device according to an embodiment of the present disclosure. In the example of Figures 3A-3C, a HV is the electronic apparatus 100, and an EV, NV, pedestrian and RSU (which represents a roadside device) are the sensing electronic device. Unless otherwise specified, in the following drawings described in combination with the electronic apparatus 100, the HV is the electronic apparatus 100, and the EV, NV, RSU and pedestrian are the sensing electronic device.

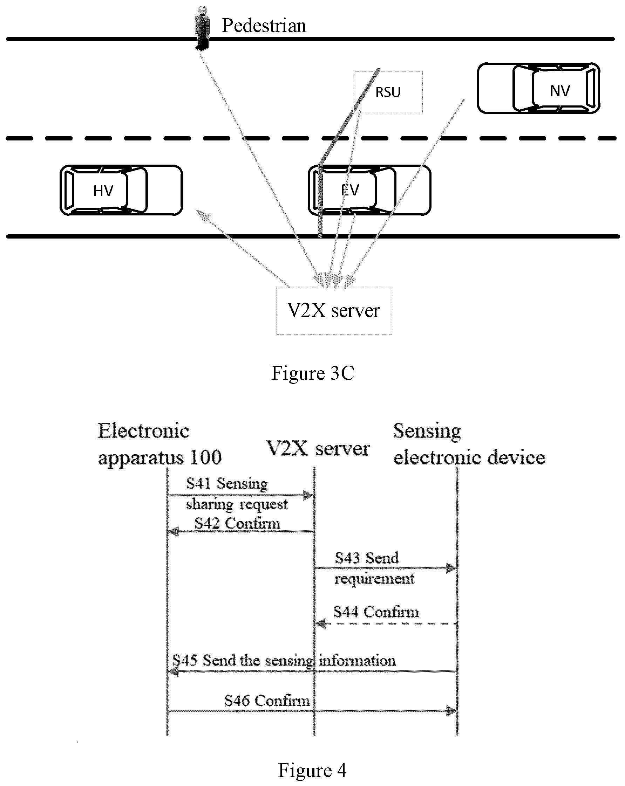

In S21 of Figure 2, the electronic apparatus 100 sends a sensing sharing request to the V2X server. As shown in Figure 3A, the HV sends a sensing sharing request to the V2X server. In S22 of Figure 2, the V2X server confirms the sensing sharing request. In S23 of Figure 2, the V2X server establishes a connection with the sensing electronic devices within the sensing requirement range of the electronic apparatus 100, and sends the requirement to the sensing electronic devices in a form of one to one unicast or broadcasts the requirement to the sensing electronic devices. As shown in Figure 3B, the V2X server establishes a connection with the sensing electronic devices (such as a EV, NV, RSU and pedestrian) within the sensing requirement range of the electronic apparatus 100, and sends the requirement to these sensing electronic devices. In a case that the V2X server is connected to the sensing electronic device in a form of unicast, the sensing electronic device confirms the connection, as shown in S24 of Figure 2. However, in a case that the V2X server is connected to the sensing electronic device in a broadcasting manner, the sensing electronic device does not confirm the connection. In S25 of Figure 2, the sensing electronic device feeds the respective condition sensing information sensed back together to the V2X server. In S26 of Figure 2, the V2X server fuses the condition sensing information received from the sensing electronic device, and transfers the obtained fusion sensing information to the electronic apparatus 100. As shown in Figure 3C, the EV, NV, RSU and pedestrian feed the respective condition sensing information sensed back together to the V2X server, and the V2X server transfers the obtained fusion sensing information to the electronic apparatus 100. In S27 of Figure 2, the electronic apparatus 100 sends a confirmation to the V2X server after receiving the fusion sensing information.

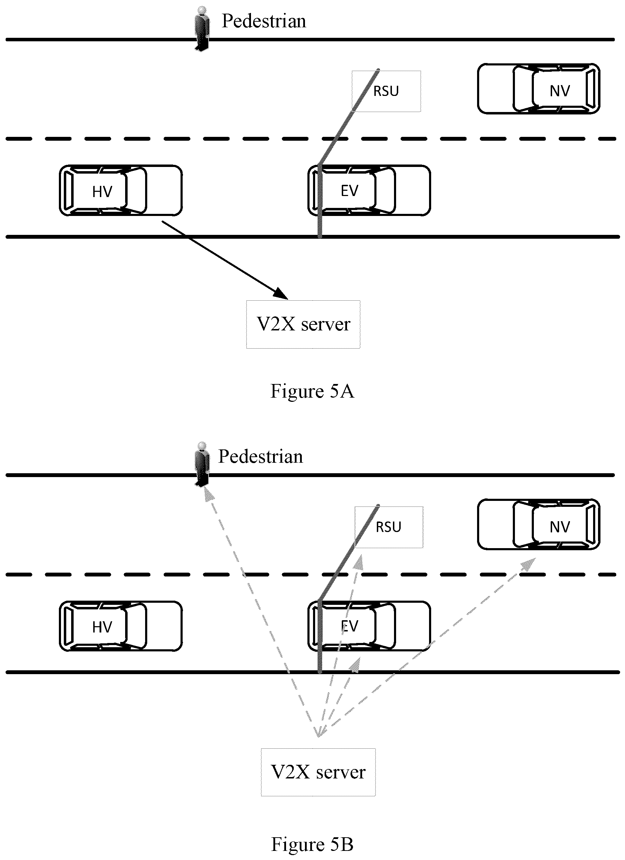

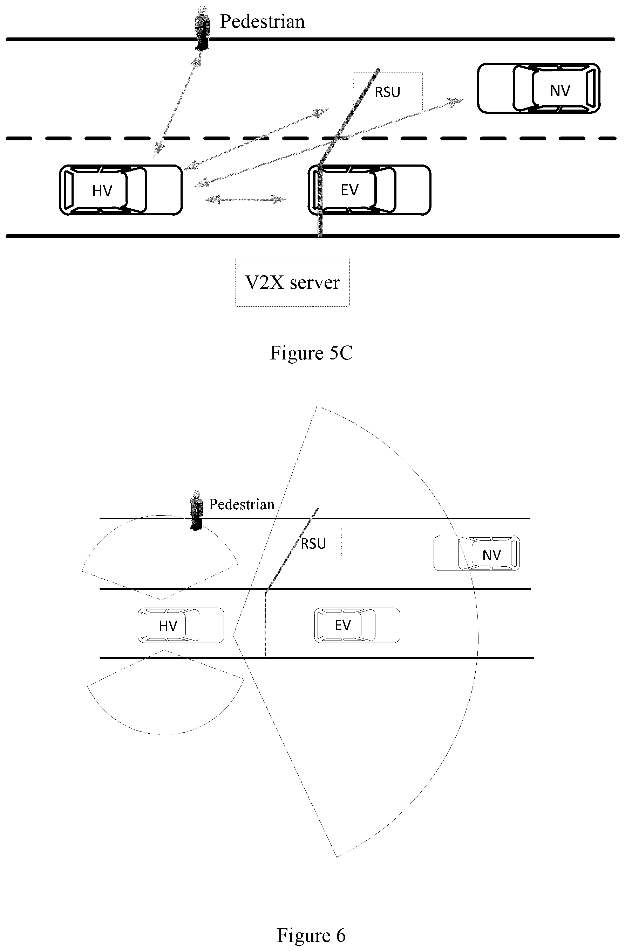

As described above, the V2X server fuses the condition sensing information fed back from the at least one sensing electronic device, and then sends the fusion sensing information to the electronic apparatus 100. However, the present disclosure is not limited thereto. The sensing electronic device may also send the condition sensing information directly to the electronic apparatus 100 in a unicast way, without fusing the condition sensing information by the V2X server. Figure 4 is another flowchart showing information interaction among an electronic apparatus, a V2X server and a sensing electronic device according to an embodiment of the present disclosure. Figures 5A-5C are another schematic diagrams showing interaction among an electronic apparatus, a V2X server, and a sensing electronic device according to an embodiment of the present disclosure. S41 to S44 in Figure 4 corresponds to S21 to S24 in Figure 2 respectively, and Figures 5A and 5B correspond to Figures 3A and 3B respectively, which will not be described here. In S45 of Figure 4, the sensing electronic device establishes a connection with the electronic apparatus 100 in a unicast way and sends the condition sensing information directly to the electronic apparatus 100. In S46 of Figure 4, the electronic apparatus 100 sends a confirmation to the sensing electronic device after receiving the condition sensing information. As shown in Figure 5C, the EV, NV, RSU and pedestrian each establish a connection with the HV, to transfer the condition sensing information and confirmation between the EV, NV, RSU, pedestrian and the HV.

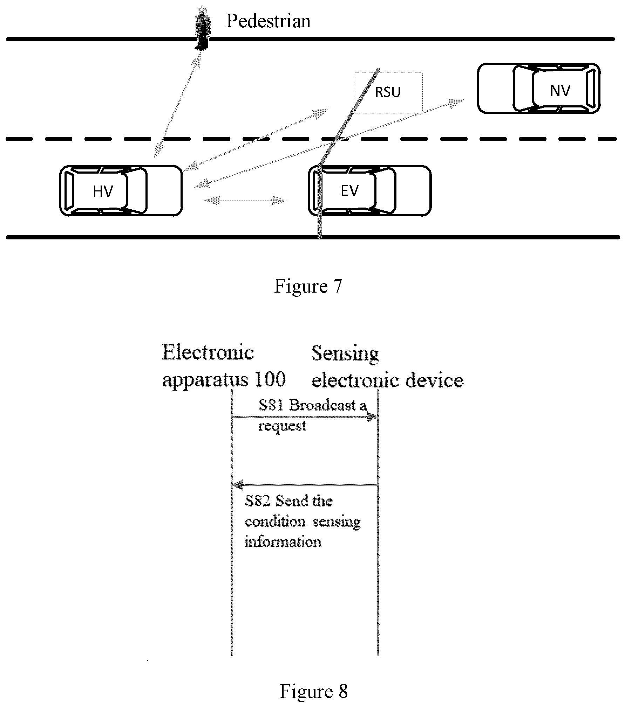

The embodiment is described above in which the electronic apparatus 100 sends the active request to the V2X server that provides services for the electronic apparatus 100. However, the electronic apparatus 100 may also send the active request to the sensing electronic device directly in a broadcasting manner rather than through the V2X server. For example, the electronic apparatus 100 may send the active request to the sensing electronic device periodically in a broadcasting manner or send the active request to the sensing electronic device aperiodically in a broadcasting manner according to the road conditions. Figure 6 is a schematic diagram showing an electronic apparatus 100 broadcasting a sensing sharing request to a sensing electronic device according to an embodiment of the present disclosure. As shown in Figure 6, the HV broadcasts a sensing sharing request to the EV, NV, pedestrian and RSU. The sensing electronic device that receives the request broadcasted by the electronic apparatus 100 each establishes unicast communication with the electronic apparatus 100, and sends the condition sensing information in the form required by the electronic apparatus 100 to the electronic apparatus 100. Figure 7 is a schematic diagram showing a connection between an electronic apparatus and a sensing electronic device that receives a request broadcasted by the electronic apparatus 100 according to an embodiment of the present disclosure. As shown in Figure 7, the EV, NV, RSU and pedestrian that receive the request broadcasted by the HV establish unicast communication with the HV Figure 8 is a flowchart showing information interaction between the electronic apparatus 100 and multiple sensing electronic devices according to an embodiment of the present disclosure. In S81 of Figure 8, the electronic apparatus 100 sends a request to multiple sensing electronic devices in a broadcasting manner. In S82 of Figure 8, the electronic apparatus 100 receives the condition sensing information from the sensing electronic devices that receive the broadcasted request.

As an example, the first processing unit 101 may be configured to: in a case that the fusion sensing information does not meet a requirement of the electronic apparatus 100 for predetermined condition sensing information, communicate, based on the requirement, with one or more sensing electronic devices capable of sensing predetermined condition sensing information among at least one sensing electronic devices, to obtain the predetermined condition sensing information, and integrate the fusion sensing information with the obtained predetermined condition sensing information to obtain integrated condition sensing information, where the integrated condition sensing information meets the requirement of the electronic apparatus 100 for the predetermined condition sensing information.

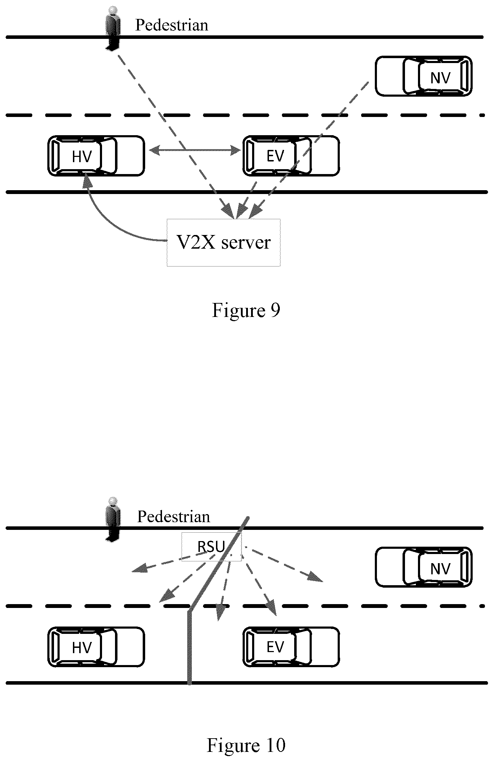

Figure 9 is a schematic diagram showing the electronic apparatus 100 obtaining predetermined condition sensing information according to an embodiment of the present disclosure. In Figure 9, assuming that the fusion sensing information is fused map information obtained from the V2X server by fusing the map information fed back from the sensing electronic devices (such as the EV, NV, RSU and pedestrian) around the electronic apparatus 100, and the predetermined condition sensing information is the map information of an area. If the fused map information does not meet the requirement of the electronic apparatus 100 for the map information of an area (for example, the resolution of the map information of an area included in the fused map information is too low, or the fused map information lacks the map information of a location in the area, etc.), the electronic apparatus 100 communicates with one or more sensing electronic devices (e.g., the EV) capable of sensing the map information of the area, to obtain the map information of the area.

For example, compared with the fusion processing performed by the V2X server described above, the integration processing refers to analyzing the fusion sensing information and the obtained predetermined condition sensing information separately, and combining the fusion sensing information and the obtained predetermined condition sensing information, for example. As an example, performing the integration processing on the fusion sensing information and the obtained predetermined condition sensing information includes superimposing the obtained predetermined condition sensing information and the fusion sensing information. As an example, performing the integration processing on the fusion sensing information and the obtained predetermined condition sensing information includes performing local enhancement on the fusion sensing information using the obtained predetermined condition sensing information.

In a case that the fusion sensing information does not meet the requirement of the electronic apparatus 100 for the predetermined condition sensing information, the predetermined condition sensing information that meets the requirement is obtained. On the one hand, the bandwidth of a single data transmission can be saved, and on the other hand, the electronic apparatus 100 may purposely obtain the predetermined condition sensing information.

As an example, the first processing unit 101 may be configured to perform the passive response based on the sensing capability to the surrounding condition that is broadcasted by the at least one sensing electronic device to obtain condition sensing information from at least one sensing electronic device. Hereinafter, the sensing capability is sometimes referred to as sensing sharing capability.

For example, the sensing electronic device periodically broadcasts its sensing sharing capability. For example, the sensing sharing capability may include at least one of sensing range, sensing accuracy, sensing cycle, sensing sharing level (divided according to the sensing quality), and so on. After receiving a broadcast message of the sensing sharing capability of the sensing electronic device, the electronic apparatus 100 establishes unicast communication with the sensing electronic device separately according to its own requirement, so as to obtain the road condition information of a sensing blind area or an area that is out of predetermined range (for example, several kilometers away) of the electronic apparatus 100 from the sensing electronic device. Broadcasting the sensing sharing capability by the sensing electronic device has the advantage of avoiding occupation of too much bandwidth for a long time due to broadcasting directly of a condition sensing information content. When broadcasting a BSM (Basic Security Message) message, the sensing electronic device may send information about the sensing sharing capability together with the BSM message. In addition, in a case that the sensing electronic device is a roadside device, the information about the sensing sharing capability may be organically combined into a road condition information broadcast message.

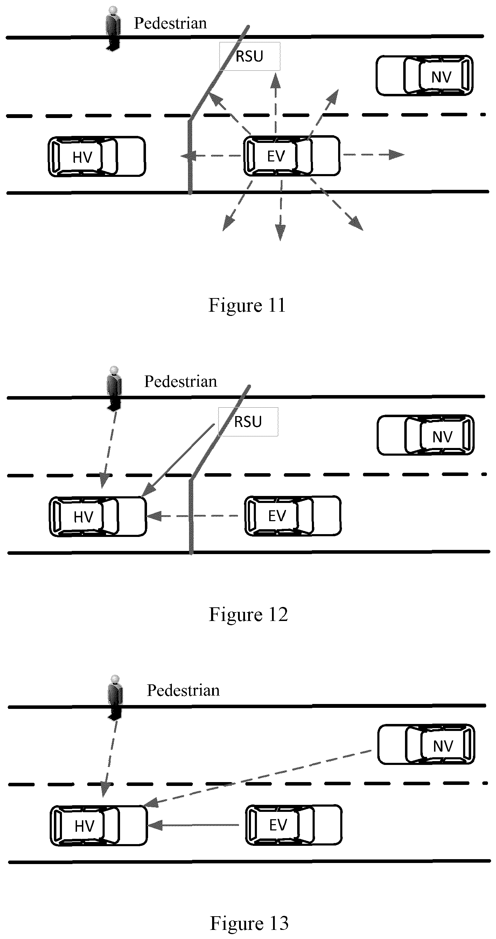

Figure 10 is a schematic diagram showing the electronic apparatus 100 obtaining condition sensing information from a sensing electronic device through passive response according to an embodiment of the present disclosure. Figure 11 is another schematic diagram showing the electronic apparatus 100 obtaining condition sensing information from a sensing electronic device through passive response according to an embodiment of the present disclosure. As shown in Figure 10, the RSU broadcasts its sensing capability to the surrounding condition, and the HV obtains condition sensing information from the RSU through passive response. As shown in Figure 11, the EV broadcasts its sensing capability to the surrounding condition, and the HV obtains condition sensing information from the EV through passive response.

As an example, the first processing unit 101 may be configured to establish unicast communication with the sensing electronic device corresponding to the passive response among the at least one sensing electronic devices, and obtain condition sensing information from the sensing electronic device corresponding to the passive response.

As an example, the first processing unit 101 may be configured to: in the case that the at least one sensing electronic device includes a roadside device that provides services for the electronic apparatus 100, take the condition sensing information sensed by the roadside device as reference sensing information; in a case that the reference sensing information does not meet a requirement of the electronic apparatus 100 for predetermined condition sensing information, communicate, based on the requirement, with one or more sensing electronic devices capable of sensing the predetermined condition sensing information among the at least one sensing electronic devices, to obtain the predetermined condition sensing information; and integrate the reference sensing information with the obtained predetermined condition sensing information to obtain integrated condition sensing information, where the integrated condition sensing information meets the requirement of electronic apparatus 100 for the predetermined condition sensing information.

For example, a camera and other sensing components of the roadside device are usually stronger than other sensing electronic devices (for example, a vehicle-mounted sensing electronic device). Therefore, the condition sensing information sensed by the roadside device may be taken as the reference sensing information. A sensing result of other sensing electronic devices (for example, the predetermined condition sensing information) is used to perform local enhancement on the reference sensing information.

Figure 12 is another schematic diagram showing the electronic apparatus 100 obtaining predetermined condition sensing information according to an embodiment of the present disclosure. As shown in Figure 12, if the HV is within the coverage range of the RSU, the HV may take the condition sensing information sensed by the RSU as the reference sensing information. Assuming that the predetermined condition sensing information is the condition sensing information that may be sensed by the pedestrian, the HV may communicate with the pedestrian to obtain the predetermined condition sensing information.

The electronic apparatus 100 receives the condition sensing information from different sensing electronic devices, so that the electronic apparatus 100 receives much condition sensing information. In addition, due to the poor sensing effect of some sensing electronic devices, the quality of the condition sensing information received by the electronic apparatus 100 from different sensing electronic devices varies. Part of the condition sensing information received by the electronic apparatus 100 may be redundant. Assuming that the condition sensing information is map information, the RSU and EV both can sense the map information of a same area, and the quality of the map information of the area sensed by the RSU is higher than that sensed by the EV The electronic apparatus 100 may not process the map information that is sensed by the EV whose quality is lower than the quality of the reference map information sensed by the RSU after receiving the map information that is sensed by the EV, to save the computing resources of the electronic apparatus 100. In addition, the redundant information compared to the reference sensing information may be deleted or not processed, to save the computing resources. In a case that the reference sensing information sensed by the RSU does not meet the requirement of the electronic apparatus 100 for the predetermined condition sensing information (for example, the map information that may be sensed by the pedestrian), the predetermined condition sensing information is obtained. On the one hand, the bandwidth of a single data transmission can be saved. On the other hand, it is possible to obtain the condition sensing information (for example, the map information that may be sensed by the pedestrian) of a specific area (for example, an area that may be sensed by the pedestrian) purposefully.

As an example, the first processing unit 101 may be configured to: in a case that the at least one sensing electronic device does not include a roadside device that provides services for the electronic apparatus 100, select one or more sensing electronic devices from the at least one sensing electronic devices based on the sensing capability broadcasted by the at least one sensing electronic devices and/or a distance to the electronic apparatus 100, and take the condition sensing information sensed by the one or more sensing electronic devices as reference sensing information; in a case that the reference sensing information does not meet the requirement of the electronic apparatus for predetermined condition sensing information, communicate, based on the requirement, with the sensing electronic device capable of sensing the predetermined condition sensing information among the at least one sensing electronic devices, to obtain the predetermined condition sensing information; and integrate the reference sensing information and the obtained predetermined condition sensing information to obtain integrated condition sensing information, where the integrated condition sensing information meets the requirement of the electronic apparatus 100 for the predetermined condition sensing information.

Figure 13 is still another schematic diagram showing the electronic apparatus 100 obtaining predetermined condition sensing information according to an embodiment of the present disclosure. As shown in Figure 13, the HV is not within the coverage range of the RSU, and the sensing electronic devices may include the EV, NV and pedestrian. For example, the HV takes the condition sensing information sensed by the EV as the reference sensing information based on the sensing capability broadcasted by the sensing electronic device and/or the distance to the HV. Assuming that the predetermined condition sensing information is the condition sensing information that may be sensed by the pedestrian, the electronic apparatus 100 may communicate with the pedestrian to obtain the predetermined condition sensing information.

The quality of condition sensing information received by the electronic apparatus 100 from different sensing electronic devices varies. Assuming that the condition sensing information is map information, the EV and NV both can sense the map information of a same area, and the quality of the map information of an area sensed by the EV is higher than that sensed by the NV. The electronic apparatus 100 may not process the map information that is sensed by the NV whose quality is lower than the quality of the reference map information sensed by the EV after receiving the map information that is sensed by the NV, to save the computing resources of the electronic apparatus 100. In addition, the redundant information compared to the reference sensing information may be deleted or not processed, to save computing resources. In a case that the reference sensing information sensed by the EV does not meet the requirement of the electronic apparatus 100 for the predetermined condition sensing information (for example, the map information that may be sensed by the pedestrian), the predetermined condition sensing information is obtained. On the one hand, the bandwidth of a single data transmission can be saved. On the other hand, it is possible to obtain the condition sensing information (for example, the map information that may be sensed by the pedestrian) of a specific area (for example, an area that may be sensed by the pedestrian) purposefully.

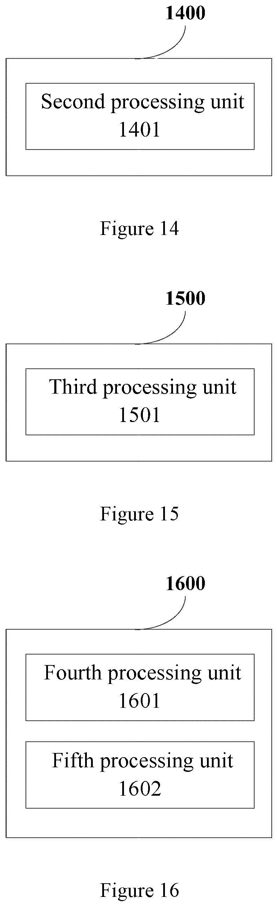

According to an embodiment of the present disclosure, an electronic apparatus 1400 for wireless communications is also provided. Figure 14 shows a block diagram of functional modules of an electronic apparatus for wireless communications according to another embodiment of the present disclosure. As shown in Figure 14, the electronic apparatus 1400 includes a second processing unit 1401. The second processing unit 1401 may be configured to: in response to a request sent by a user equipment within a service scope of the electronic apparatus 1400 for obtaining condition sensing information about a surrounding condition of the user equipment, fuse the condition sensing information fed back from at least one sensing electronic device capable of sensing the condition sensing information to obtain fusion sensing information, and send the fusion sensing information to the user equipment.

As an example, the electronic apparatus 1400 may be arranged on a V2X server side or communicatively connected to the V2X server, for example. Here, it is further to be noted that the electronic apparatus 1400 may be implemented in a chip level or apparatus level. For example, the electronic apparatus 1400 may function as the V2X server itself, and may further include an external device such as a memory and a transceiver (not shown). The memory may be used to store programs required by the V2X server to achieve various functions and related data information. The transceiver may include one or more communication interfaces to support communications with different devices (for example, user equipment, another V2X server and the like). Implementations of the transceiver are not limited herein.

As an example, the electronic apparatus 1400 may also be arranged on a base station side or communicatively connected to the base station, for example. Here, it should also be noted that the electronic apparatus 1400 may be implemented in a chip level, or apparatus level. For example, the electronic apparatus 1400 may function as the base station itself, and may also include an external device such as a memory, a transceiver (not shown). The memory may be used to store programs required by the base station to achieve various functions and related data information. The transceiver may include one or more communication interfaces to support communications with different devices (for example, user equipment, another base station and the like). Implementations of the transceiver are not limited herein.

As an example, the user equipment may be the electronic apparatus 100 described above.

For the sensing electronic device, condition sensing information and fusion sensing information, reference is made to the relevant description in the electronic apparatus 100 described above, which will not be described here.

The electronic apparatus 1400 may obtain the fusion sensing information by fusing the condition sensing information fed back from at least one sensing electronic device, for the user equipment to assist itself in making certain decisions based on the fusion sensing information.

According to an embodiment of the present disclosure, an electronic apparatus 1500 for wireless communications is also provided. Figure 15 shows a block diagram of functional modules of an electronic apparatus 1500 for wireless communications according to another embodiment of the present disclosure. As shown in Figure 15, the electronic apparatus 1500 includes a third processing unit 1501. The third processing unit 1501 may be configured to broadcast to the user equipment within a service scope of the electronic apparatus 1500 the sensing capability of the electronic apparatus to a surrounding condition of the user equipment; and send the condition sensing information sensed by the electronic apparatus 1500 to the user equipment based on the response of the user equipment.

As an example, the electronic apparatus 1500 may be arranged on a roadside device side or communicatively connected to the roadside device, for example. Here, it should also be noted that the electronic apparatus 1500 may be implemented in the chip level, or apparatus level. For example, the electronic apparatus 1500 may function as a roadside device itself, and may also include an external device such as a memory, a transceiver (not shown). The memory may be used to store programs required for performing various functions by the roadside device and related data information. The transceiver may include one or more communication interfaces to support communication with different devices (e. g., user equipment, other roadside devices, etc.). Implementation of the transceiver is not particularly limited here.

As an example, the user equipment may be the electronic apparatus 100 described above.

For the sensing capability and condition sensing information, reference is made to the relevant description in the electronic apparatus 100 described above, which will not be described here.

The electronic apparatus 1500 sends the sensed sensing condition information to the user equipment for the user equipment to assist itself in making certain decisions based on the condition sensing information.

According to an embodiment of the present disclosure, an electronic apparatus 1600 for wireless communications is also provided. Figure 16 shows a block diagram of functional modules of an electronic apparatus 1600 for wireless communications according to another embodiment of the present disclosure. As shown in Figure 16, the electronic apparatus 1600 includes a fourth processing unit 1601 and a fifth processing unit 1602. The fourth processing unit 1601 may be configured to: take the condition sensing information about a surrounding condition of the electronic apparatus that is obtained by an acquisition device as the reference sensing information; in a case that the reference sensing information does not meet the requirement of the electronic apparatus 1600 for predetermined condition sensing information, communicate, based on the requirement, with at least one sensing electronic device capable of sensing the predetermined condition sensing information, to obtain the predetermined condition sensing information. The fifth processing unit 1602 may be configured to integrate the obtained predetermined condition sensing information and the reference sensing information, to obtain integrated condition sensing information, where the integrated condition sensing information meets the requirement of the electronic apparatus 1600 for the predetermined condition sensing information.

The fourth processing unit 1601 and fifth processing unit 1602 may be implemented by one or more processing circuitries. The processing circuitry may be implemented as, for example, a chip.

The electronic apparatus 1600, for example, may be arranged on a user equipment side or may be communicatively connected to a user equipment. It is further to be noted that the electronic apparatus 1600 may be implemented in a chip level or apparatus level. For example, the electronic apparatus 1600 may function as a user equipment itself, and may include an external device such as a memory and a transceiver (not shown in Figure 16). The memory may be configured to store programs required for performing various functions by the user equipment and related data information. The transceiver may include one or more communication interfaces to support communication with different devices (such as a base station, and other user equipment). Implementations of the transceiver are not particularly limited here.

For example, the acquisition device may be any electronic device capable of acquiring condition sensing information about a surrounding condition of the electronic apparatus 1600. For example, the acquisition device may be a roadside device, a V2X server, a base station, or other sensing electronic devices such as user equipment.

As an example, the condition sensing information is information about a surrounding condition of the electronic apparatus 1600. For example, the condition sensing information may be information about other traffic participants (including but not limited to a target object such as a vehicle, a pedestrian, a cyclist, other road traffic elements) around the electronic apparatus 1600, information about the temperature around the electronic apparatus 1600, information about the humidity around the electronic apparatus 1600, and so on.

As an example, the sensing electronic device is any device capable of sensing and transferring the condition sensing information. For example, the sensing electronic device may be a device capable of sensing and transferring other traffic participants around the electronic apparatus 1600, a device capable of sensing and transferring the temperature around the electronic apparatus 1600, a device capable of sensing and transferring the humidity around the electronic apparatus 1600, and so on.

As an example, in a V2X scenario, the electronic apparatus 1600 may include an on-board electronic apparatus. For example, the electronic apparatus 1600 may be arranged on a vehicle (such as an autonomous vehicle). For example, the electronic apparatus 1600 may be a vehicle navigation device. In the following, for convenience, the description is made by taking the electronic apparatus 1600 as the on-board electronic apparatus. As an example, the sensing electronic device may include an on-board electronic device, and also include a vulnerable road group. For example, the vulnerable road group may not only include a pedestrian near the electronic apparatus 1600 who carries an electron device capable of sensing and transferring condition sensing information, but also include a bicycle, an electric bicycle, a balance car, a scooter, etc. that have the ability to sense and transfer condition sensing information. In the following, unless specifically stated, the pedestrian refers to a person who carries the electron device capable of sensing and transferring condition sensing information.

The fourth processing unit 1601 may compare the reference sensing information with the predetermined condition sensing information, and obtain the predetermined condition sensing information in a de redundant mode, that is, the fourth processing unit 1601 may, for example, obtain only the information that is different from the reference sensing information in the predetermined condition sensing information.

Integration processing refers to analyzing the obtained predetermined condition sensing information and reference sensing information separately, and combining the obtained predetermined condition sensing information and reference sensing information. As an example, integrating the obtained predetermined condition sensing information with the reference sensing information includes superimposing the obtained predetermined condition sensing information and the reference sensing information. As an example, integrating the obtained predetermined condition sensing information and the reference sensing information includes performing local enhancement on the reference sensing information using the obtained predetermined condition sensing information.

The electronic apparatus 1600 according to the embodiment of the present disclosure first obtains the reference sensing information, and then obtains the predetermined condition sensing information in a case that the reference sensing information does not meet the requirement of the electronic apparatus 1600 for the predetermined condition sensing information. In this way, the bandwidth of a single data transmission can be saved and the transmission delay can be reduced, and also the predetermined condition sensing information can be obtained purposefully. In addition, the electronic apparatus 1600 may integrate the obtained predetermined condition sensing information with the reference sensing information to obtain more comprehensive and/or higher quality condition sensing information.

As an example, a case where the reference sensing information does not meet the requirement of the electronic apparatus 1600 for the predetermined condition sensing information includes that the quality of the predetermined condition sensing information included in the reference sensing information is lower than a predetermined threshold, or the predetermined condition sensing information is not included in the reference sensing information. Those skilled in the art may determine a predetermined threshold based on application scenarios, experience or experiments. For example, a case where the reference sensing information does not meet the requirement of the electronic apparatus 1600 for the predetermined condition sensing information also includes that the predetermined condition sensing information included in the reference sensing information is incomplete. Those skilled in the art may also conceive other examples where the reference sensing information does not meet the requirement of the electronic apparatus 1600 for the predetermined condition sensing information, which will not be described here.

As an example, in a case that the electronic apparatus 1600 is within the coverage range of a roadside device, the acquisition device is the roadside device, and the condition sensing information sensed by the roadside device is taken as the reference sensing information. Or in a case that the electronic apparatus 1600 is not within the coverage range of a roadside device, the acquisition device includes one or more sensing electronic devices capable of sensing the condition sensing information, and the condition sensing information sensed by the one or more sensing electronic devices is taken as the reference sensing information. In the embodiment of the electronic apparatus 1600 according to the present disclosure, the description is made again in combination with Figures 12 and 13. In the drawings described below in combination with the electronic apparatus 1600, the HV refers to the electronic apparatus 1600, the RSU refers to the roadside device, and the EV, NV and pedestrian refer to the sensing electronic device.

In Figure 12, in a case that the HV is within the coverage range of the RSU, the acquisition device is the RSU and the condition sensing information sensed by the RSU is taken as the reference sensing information. Assuming that the reference sensing information does not include the condition sensing information about whether there is a following vehicle behind the NV (that is, the reference sensing information does not meet the requirement of the electronic apparatus 1600 for whether there is a following vehicle behind the NV so that the HV determine the waiting time to complete overtaking), although not shown in Figure 12, the HV establishes communication with the NV in a form of unicast, to obtain the information about a traffic condition at a rear of the vehicle (the predetermined condition sensing information) that is captured by such as a rear camera and sensor of the NY. In addition, assuming that the RSU and EV may sense map information of a same area, the quality of the map information of the area sensed by the RSU is lower than the quality of the map information of the area sensed by the EV, because the area is at the edge of the sensing range of the RSU for example. Therefore, the reference sensing information does not meet the requirement of electronic apparatus 1600 for predetermined condition sensing information (for example, the map information of the area). In this case, the HV establishes communication with the EV in a form of unicast to obtain the map information (the predetermined condition sensing information) sensed by the EV

In a case that the electronic apparatus 1600 is not within the coverage range of a roadside device, the electronic apparatus 1600 determines one or more sensing electronic devices from which the reference sensing information is obtained. As an example, the fourth processing unit 1601 may be configured to determine one or more sensing electronic devices based on the sensing capability broadcasted by the sensing electronic device capable of sensing condition sensing information. For example, the electronic apparatus 1600 may determine the sensing electronic device with the strongest sensing capability as the sensing electronic device from which the reference sensing information is to be obtained. As an example, the fourth processing unit 1601 may be configured to determine one or more sensing electronic devices based on a distance to the electronic apparatus 1600. For example, the electronic apparatus 1600 may determine the nearest sensing electronic device to the electronic apparatus 1600 as the sensing electronic device from which reference sensing information is to be obtained. Those skilled in the art will also conceive other manners for determining one or more sensing electronic devices, which will not be described here.

In Figure 13, in a case that the HV is not within the coverage range of the RSU, assuming that the acquisition device is the EV, and the condition sensing information sensed by the EV is taken as the reference sensing information. In addition, assuming that the NV and EV both may sense the map information of a same area, the quality of the map information of the area sensed by the EV is lower than the quality of the map information of the area sensed by the NV Therefore, the reference sensing information does not meet the requirement of electronic apparatus 1600 for predetermined condition sensing information (for example, the map information of the area). In this case, the HV establishes communication with the NV in the form of unicast to obtain the map information (the predetermined condition sensing information) sensed by the NV

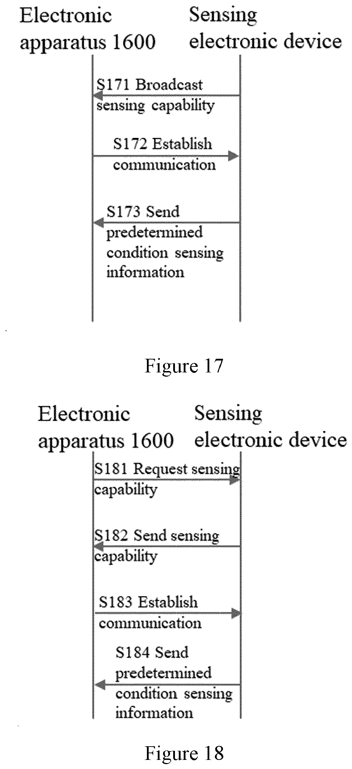

Figure 17 is a flowchart showing information interaction of the electronic apparatus 1600 obtaining predetermined condition sensing information from a sensing electronic device in a case that the sensing electronic device is capable of broadcasting its sensing capability.

In S171 of Figure 17, the electronic apparatus 1600 receives a broadcast of the sensing capability of the sensing electronic device from the sensing electronic device. In S 172 of Figure 17, in a case that the electronic apparatus 1600 confirms that the sensing electronic device can sense the predetermined condition sensing information based on the received sensing capability, the electronic apparatus 1600 establishes communication with the sensing electronic device in a form of unicast. In S173 of Figure 17, the sensing electronic device sends the predetermined condition sensing information to the electronic apparatus 1600.

Figure 18 is a flowchart showing information interaction of the electronic apparatus 1600 obtaining predetermined condition sensing information from a sensing electronic device in a case that the sensing electronic device is incapable of broadcasting its sensing capability.

In S181 of Figure 18, the electronic apparatus 1600 requests the sensing capability of the sensing electronic device from the sensing electronic device in a form of unicast. In S182 of Figure 18, the electronic apparatus 1600 receives the sensing capability sent by the sensing electronic device. In S183 of Figure 18, in a case that the electronic apparatus 1600 confirms that the sensing electronic device can sense the predetermined condition sensing information based on the received sensing capability, the electronic apparatus 1600 establishes communication with the sensing electronic device in a form of unicast. In S184 of Figure 18, the sensing electronic device sends the predetermined condition sensing information to the electronic apparatus 1600.

As an example, the fourth processing unit 1601 may be configured to obtain the reference sensing information from the acquisition device by sending a request for obtaining the reference sensing information to the acquisition device or performing response to the sensing capability to a surrounding condition that is broadcasted by the acquisition device. That is, the fourth processing unit 1601 may obtain the reference sensing information from the acquisition device in a manner of an active request or a passive response.

As an example, in a case that the electronic apparatus 1600 is within a service scope of the V2X server, the acquisition device is the V2X server, and the fusion sensing information obtained from the V2X server by fusing the condition sensing information fed back from the sensing electronic device that can sense the condition sensing information is taken as the reference sensing information.

As an example, the V2X server fusing the condition sensing information fed back from the sensing electronic devices means that the V2X server only performs at least one of processes: simply summarizing the condition sensing information received from one or more sensing electronic devices among the sensing electronic devices, classifying the condition sensing information, and removing the redundancy in the condition sensing information. Other examples of fusion processing may be conceived by those skilled in the art, which will not be described here.

Compared with a controller at the vehicle end, the V2X server has higher computing power and reliability. Besides, because the V2X server is deployed on a roadside, the efficiency of information fusion processing may be improved, so as to achieve rapid signaling interaction and data sharing with lower delay. Therefore, the electronic apparatus 1600 may receive the fusion sensing information more safely and reliably through the V2X server, and may obtain the fusion sensing information with lower delay.

With respect to the electronic apparatus 1600 obtaining the predetermined condition sensing information from the sensing electronic device, it can be understood in combination with Figure 9 described above, as long as the HV in Figure 9 is understood as the electronic apparatus 1600.

As an example, the fourth processing unit 1601 may be configured to send a request for obtaining the reference sensing information to the V2X server and obtain the reference sensing information from the V2X server. For example, the electronic apparatus 1600 may send the request to the V2X server periodically or aperiodically.

In the process of describing the electronic apparatus for wireless communications in the above embodiments, some processes or methods are also disclosed. Hereinafter, an overview of the methods is given without repeating some details that are discussed above. However, it should be noted that, although the methods are disclosed while describing the electronic apparatus for wireless communications, the methods do not necessarily employ or are not necessarily performed by the aforementioned components. For example, the embodiments of the electronic apparatus for wireless communications may be partially or completely implemented with hardware and/or firmware, and the method for wireless communications described below may be performed by a computer-executable program completely, although the hardware and/or firmware for the electronic apparatus for wireless communications may also be used in the methods.

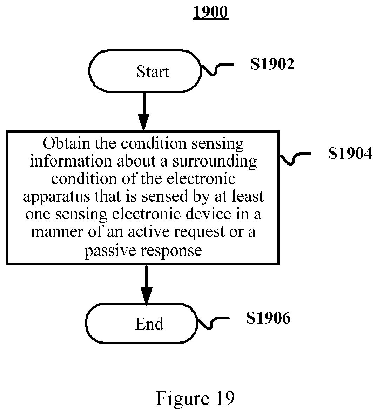

Figure 19 shows is a flowchart of a method 1900 for wireless communications according to an embodiment of the present disclosure. The method 1900 starts at step S1902. In step S 1904, the condition sensing information about a surrounding condition of the electronic apparatus that is sensed by at least one sensing electronic device is obtained in a manner of an active request or a passive response. The method 1900 ends at step S 1906.

The method may be performed by the electronic apparatus 100 described above. The specific details may be found in the description in the corresponding position above, and thus are not repeated here.

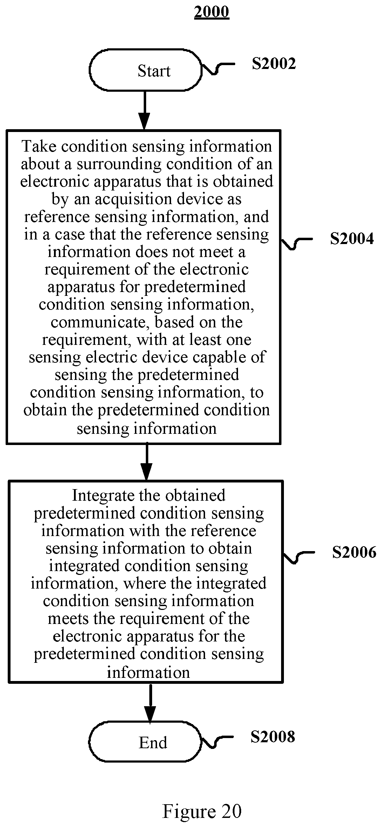

Figure 20 shows a flowchart of a method 2000 for wireless communications according to another embodiment of the present disclosure. The method 2000 starts at step S2002. In step S2004, the condition sensing information about a surrounding condition of the electronic apparatus that is obtained by an acquisition device is taken as reference sensing information. In a case that the reference sensing information does not meet a requirement of the electronic apparatus for predetermined condition sensing information, communicate, based on the requirement, with at least one sensing electric device capable of sensing the predetermined condition sensing information, to obtain the predetermined condition sensing information. In step S2006, the obtained predetermined condition sensing information is integrated with the reference sensing information, to obtain integrated condition sensing information, where the integrated condition sensing information meets the requirement of the electronic apparatus for the predetermined condition sensing information. The method 2000 ends at step S2008.

The method may be performed by the electronic apparatus 1600 described above. The specific details may be found in the description in the corresponding position above, and thus are not repeated here.

It should be noted that the above methods may be implemented in combination with each other or separately.

In addition, although the above embodiments are mainly described in combination with a scenario of an Internet of Vehicles, the application scenario of the technology according to the present disclosure is not limited to this.

The technology of the present disclosure may be applied to various products.

The electronic apparatus 100 and electronic apparatus 1600 may be implemented as various user equipment. The user equipment may be implemented as a mobile terminal (such as a smart phone, a tablet personal computer (PC), a notebook PC, a portable game terminal, a portable/dongle type mobile router, and a digital camera apparatus), or an in-vehicle terminal (such as a vehicle navigation device). The user equipment may also be realized as a terminal (that is also referred to as a machine type communication (MTC) terminal) that performs machine-to-machine (M2M) communication. Furthermore, the user equipment may be a radio communication module (such as an integrated circuit module including a single die) mounted on each of the terminals.

For example, the electronic apparatus 1400 may be implemented as various V2X servers or various base stations. The base station may be implemented as any type of evolved node B (eNB) or gNB (a 5G base station). The eNB includes for example a macro eNB and a small eNB. The small eNB may be an eNB of a cell with a coverage less than that of a macro cell, such as a pico-eNB, a micro-eNB and a household (femto) eNB. For gNB, the case may also be similar to that for eNB. Alternatively, the base station may also be implemented as any other type of base stations, such as a NodeB and a base transceiver station (BTS). The base station may include a main body (also referred to as a base station device) configured to control wireless communications, and one or more remote radio heads (RRH) arranged in a different place from the main body. In addition, various types of user equipment may each operate as the base station by temporarily or semi-persistently executing a base station function.

For example, the electronic apparatus 1500 may be implemented as various types of roadside devices.

### [Application Examples About Base Station]

### (First Application Example)

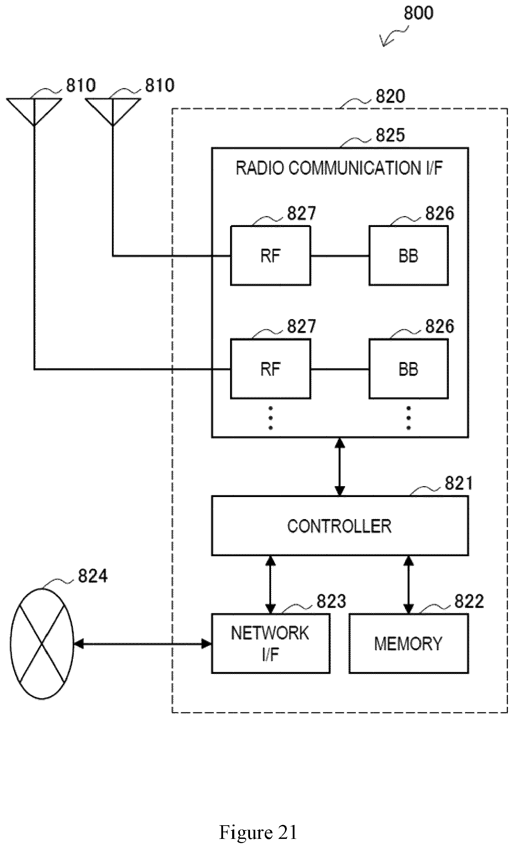

Figure 21 is a block diagram showing a first example of a schematic configuration of an eNB or gNB to which the technology of the present disclosure can be applied. Note that, the following description takes an eNB as an example, but it may also be applied to a gNB. An eNB 800 includes one or more antennas 810 and base station equipment 820. The base station equipment 820 and each antenna 810 may be connected to each other via an RF cable.

Each of the antennas 810 includes a single or multiple antenna elements (such as multiple antenna elements included in a Multi-Input Multi-Output (MIMO) antenna), and is used for the base station equipment 820 to transmit and receive wireless signals. As shown in Figure 21, the eNB 800 may include multiple antennas 810. For example, the multiple antennas 810 may be compatible with multiple frequency bands used by the eNB 800. Although Figure 21 shows an example in which the eNB 800 includes multiple antennas 810, the eNB 800 may also include a single antenna 810.

The base station equipment 820 includes a controller 821, a memory 822, a network interface (I/F) 823, and a radio communication interface (I/F) 825.

The controller 821 may be, for example, a CPU or a DSP, and manipulate various functions of a higher layer of the base station equipment 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have a logical function for performing control such as radio resource control, radio bearer control, mobility management, admission control, and scheduling. The control may be executed in conjunction with nearby eNBs or core network nodes. The memory 822 includes an RAM and an ROM, and stores programs executed by the controller 821 and various types of control data (such as a terminal list, transmission power data, and scheduling data).

The network interface 823 is a communication interface for connecting the base station equipment 820 to a core network 824. The controller 821 may communicate with the core network node or another eNB via the network interface 823. In this case, the eNB 800 and the core network node or other eNBs may be connected to each other through a logical interface (such as an S1 interface and an X2 interface). The network interface 823 may also be a wired communication interface, or a wireless communication interface for a wireless backhaul line. If the network interface 823 is a wireless communication interface, the network interface 823 may use a higher frequency band for wireless communications than the frequency band used by the radio communication interface 825.

The radio communication interface 825 supports any cellular communication scheme (such as Long Term Evolution (LTE) and LTE-Advanced), and provides wireless connection to a terminal located in a cell of the eNB 800 via an antenna 810. The radio communication interface 825 may generally include, for example, a baseband (BB) processor 826 and an RF circuit 827. The BB processor 826 may execute, for example, encoding/decoding, modulation/demodulation, and multiplexing/demultiplexing, and execute various types of signal processing of layers (e.g., L1, Medium Access Control (MAC), Radio Link Control (RLC), and Packet Data Convergence Protocol (PDCP)). Instead of the controller 821, the BB processor 826 may have a part or all of the above-mentioned logical functions. The BB processor 826 may be a memory storing a communication control program, or a module including a processor and related circuits configured to execute the program. An update program may cause the function of the BB processor 826 to be changed. The module may be a card or blade inserted into a slot of the base station equipment 820. Alternatively, the module may also be a chip mounted on a card or blade. Meanwhile, the RF circuit 827 may include, for example, a mixer, a filter, and an amplifier, and transmit and receive a wireless signal via the antenna 810.

As shown in Figure 21, the radio communication interface 825 may include multiple BB processors 826. For example, the multiple BB processors 826 may be compatible with multiple frequency bands used by the eNB 800. As shown in Figure 21, the radio communication interface 825 may include multiple RF circuits 827. For example, the multiple RF circuits 827 may be compatible with multiple antenna elements. Although Figure 21 shows an example in which the radio communication interface 825 includes multiple BB processors 826 and multiple RF circuits 827, the radio communication interface 825 may also include a single BB processor 826 or a single RF circuit 827.

In the eNB 800 as shown in Figure 21, in a case that the electronic apparatus 1400 described with reference to Figure 14 is implemented as a base station, the transceiver of the electronic apparatus 1400 may be implemented by a radio communication interface 825. At least a part of the function may also be implemented by the controller 821. For example, the controller 821 may send the fusion sensing information to the user equipment by performing the function of the third processing unit 1401 described above with reference to Figure 14.

### (Second Application Example)

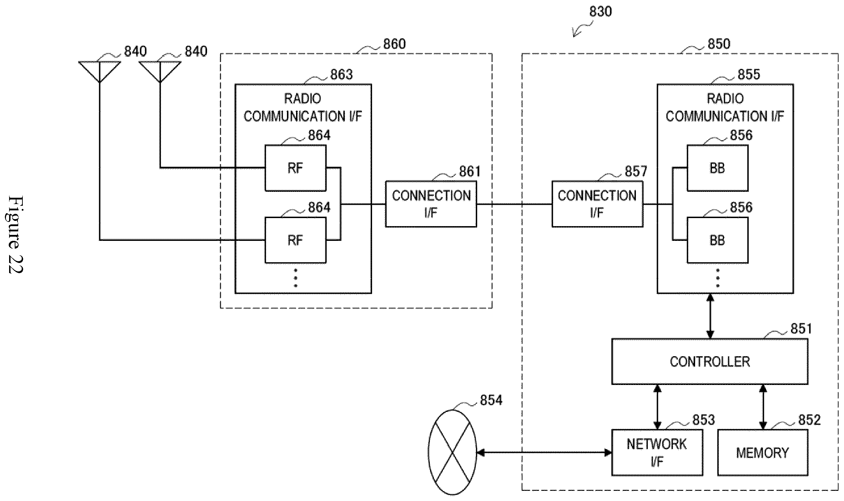

Figure 22 is a block diagram showing a second example of a schematic configuration of an eNB or gNB to which the technology of the present disclosure can be applied. Note that similarly, the following description takes an eNB as an example, but it may also be applied to a gNB. An eNB 830 includes one or more antennas 840, base station equipment 850, and an RRH 860. The RRH 860 and each antenna 840 may be connected to each other via an RF cable. The base station equipment 850 and the RRH 860 may be connected to each other via a high-speed line such as an optical fiber cable.

Each of the antennas 840 includes a single or multiple antenna elements (such as multiple antenna elements included in a MIMO antenna) and is used for the RRH 860 to transmit and receive a wireless signal. As shown in Figure 22, the eNB 830 may include multiple antennas 840. For example, the multiple antennas 840 may be compatible with multiple frequency bands used by the eNB 830. Although Figure 22 shows an example in which the eNB 830 includes multiple antennas 840, the eNB 830 may also include a single antenna 840.

The base station equipment 850 includes a controller 851, a memory 852, a network interface 853, a radio communication interface 855, and a connection interface 857. The controller 851, the memory 852, and the network interface 853 are the same as the controller 821, the memory 822, and the network interface 823 as described with reference to Figure 21.

The radio communication interface 855 supports any cellular communication scheme (such as LTE and LTE-Advanced), and provides wireless communications to a terminal located in a sector corresponding to the RRH 860 via the RRH 860 and the antenna 840. The radio communication interface 855 may generally include, for example, a BB processor 856. The BB processor 856 is the same as the BB processor 826 as described with reference to Figure 21 except that the BB processor 856 is connected to the RF circuit 864 of the RRH 860 via the connection interface 857. As shown in Figure 22, the radio communication interface 855 may include multiple BB processors 856. For example, the multiple BB processors 856 may be compatible with multiple frequency bands used by the eNB 830. Although Figure 22 shows an example in which the radio communication interface 855 includes multiple BB processors 856, the radio communication interface 855 may also include a single BB processor 856.

The connection interface 857 is an interface for connecting the base station equipment 850 (radio communication interface 855) to the RRH 860. The connection interface 857 may also be a communication module for communication in the above-mentioned high-speed line that connects the RRH 860 to the base station equipment 850 (radio communication interface 855).

The RRH 860 includes a connection interface 861 and a radio communication interface 863.

The connection interface 861 is an interface for connecting the RRH 860 (radio communication interface 863) to the base station equipment 850. The connection interface 861 may also be a communication module for communication in the above-mentioned high-speed line.

The radio communication interface 863 transfers and receives wireless signals via the antenna 840. The radio communication interface 863 may generally include, for example, an RF circuit 864. The RF circuit 864 may include, for example, a mixer, a filter, and an amplifier, and transfer and receive wireless signals via the antenna 840. As shown in Figure 22, the radio communication interface 863 may include multiple RF circuits 864. For example, the multiple RF circuits 864 may support multiple antenna elements. Although Figure 22 shows an example in which the radio communication interface 863 includes multiple RF circuits 864, the radio communication interface 863 may also include a single RF circuit 864.

In the eNB 830 shown in Figure 22, in a case that the electronic apparatus 1400 described with reference to Figure 14 is implemented as a base station, the transceiver of the electronic apparatus 1400 may be implemented by the wireless communication interface 855. At least part of the functions may also be implemented by the controller 851. For example, the controller 851 may send the fusion sensing information to the user equipment by performing the function of the third processing unit 1401 described above with reference to Figure 14.

### [Application Example About User Equipment]

### (First Application Example)

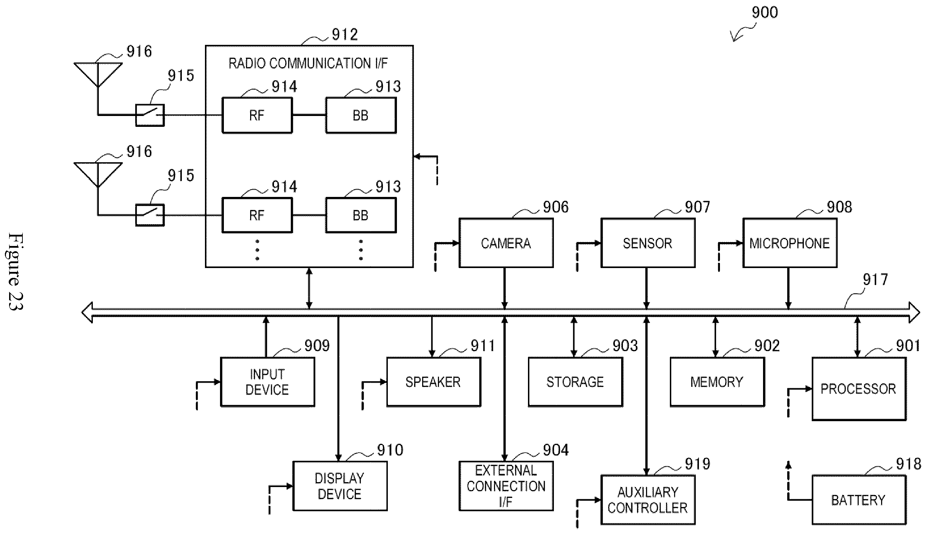

Figure 23 is a block diagram showing an example of a schematic configuration of a smart phone to which the technology of the present disclosure can be applied. The smart phone 900 includes a processor 901, a memory 902, a storage 903, an external connection interface 904, an camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls the functions of the application layer and other layers of the smart phone 900. The memory 902 includes an RAM and an ROM, and stores data and programs executed by the processor 901. The storage 903 may include a storage medium such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetic sensor, and an acceleration sensor. The microphone 908 converts sound input to the smart phone 900 into an audio signal. The input device 909 includes, for example, a touch sensor, a keypad, a keyboard, a button, or a switch configured to detect a touch on a screen of the display device 910, and receives an operation or information input from the user. The display device 910 includes a screen (such as a liquid crystal display (LCD) and an organic light emitting diode (OLED) display), and displays an output image of the smart phone 900. The speaker 911 converts the audio signal output from the smart phone 900 into sound.

The radio communication interface 912 supports any cellular communication scheme (such as LTE and LTE-Advanced), and executes wireless communications. The radio communication interface 912 may generally include, for example, a BB processor 913 and an RF circuit 914. The BB processor 913 may execute, for example, encoding/decoding, modulation/demodulation, and multiplexing/demultiplexing, and execute various types of signal processing for wireless communications. Meanwhile, the RF circuit 914 may include, for example, a mixer, a filter, and an amplifier, and transmit and receive wireless signals via the antenna 916. Note that, although the figure shows a circumstance where one RF link is connected with one antenna, this is only schematic, and a circumstance where one RF link is connected with multiple antennas through multiple phase shifters is also included. The radio communication interface 912 may be a chip module on which the BB processor 913 and the RF circuit 914 are integrated. As shown in FIG. 22, the radio communication interface 912 may include multiple BB processors 913 and multiple RF circuits 914. Although FIG. 22 shows an example in which the radio communication interface 912 includes multiple BB processors 913 and multiple RF circuits 914, the radio communication interface 912 may also include a single BB processor 913 or a single RF circuit 914.

Furthermore, in addition to the cellular communication scheme, the radio communication interface 912 may support other types of wireless communication schemes, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits included in the radio communication interface 912 (e.g., circuits for different wireless communication schemes).

Each of the antennas 916 includes a single or multiple antenna elements (such as multiple antenna elements included in a MIMO antenna), and is used for the radio communication interface 912 to transmit and receive wireless signals. As shown in Figure 23, the smart phone 900 may include multiple antennas 916. Although Figure 23 shows an example in which the smart phone 900 includes multiple antennas 916, the smart phone 900 may also include a single antenna 916.

Furthermore, the smart phone 900 may include an antenna 916 for each wireless communication scheme. In this case, the antenna switch 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to each block of the smart phone 900 as shown in Figure 18 via a feeder line, which is partially shown as a dashed line in the figure. The auxiliary controller 919 manipulates the least necessary function of the smart phone 900 in a sleep mode, for example.

In the smart phone 900 as shown in Figure 23, in a case that the electronic apparatus 100 described with reference to Figure 1 and the electronic apparatus 1600 described with reference to Figure 16 are implemented as user equipment, the transceiver of the electronic apparatus 100 and electronic apparatus 1600 may be implemented by the radio communication interface 912. At least a part of the function may also be implemented by the processor 901 or the auxiliary controller 919. For example, the processor 901 or the auxiliary controller 919 may obtain the condition sensing information by performing the first processing unit 101 described above with reference to Figure 1, and may obtain the predetermined condition sensing information by the performing functions of the fourth processing unit 1601 and the fifth processing unit 1602 described above with reference to Figure 16.

### (Second Application Example)

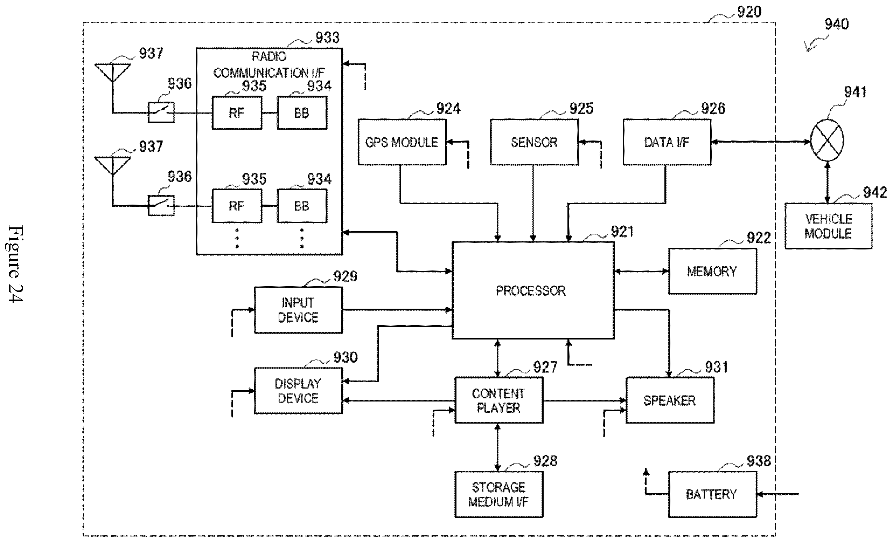

Figure 24 is a block diagram showing an example of a schematic configuration of automobile navigation equipment to which the technology of the present disclosure can be applied. The automobile navigation equipment 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls the navigation function of the automobile navigation equipment 920 and additional functions. The memory 922 includes an RAM and an ROM, and stores data and programs executed by the processor 921.

The GPS module 924 uses a GPS signal received from a GPS satellite to measure a position of the automobile navigation equipment 920 (such as latitude, longitude, and altitude). The sensor 925 may include a group of sensors, such as a gyro sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD), which is inserted into the storage medium interface 928. The input device 929 includes, for example, a touch sensor, a button, or a switch configured to detect a touch on a screen of the display device 930, and receives an operation or information input from the user. The display device 930 includes a screen such as an LCD or OLED display, and displays an image of a navigation function or reproduced content. The speaker 931 outputs the sound of the navigation function or the reproduced content.

The radio communication interface 933 supports any cellular communication scheme, such as LTE and LTE-Advanced, and executes wireless communication. The radio communication interface 933 may generally include, for example, a BB processor 934 and an RF circuit 935. The BB processor 934 may execute, for example, encoding/decoding, modulation/demodulation, and multiplexing/demultiplexing, and execute various types of signal processing for wireless communications. Meanwhile, the RF circuit 935 may include, for example, a mixer, a filter, and an amplifier, and transmit and receive wireless signals via the antenna 937. The radio communication interface 933 may also be a chip module on which the BB processor 934 and the RF circuit 935 are integrated. As shown in Figure 24, the radio communication interface 933 may include multiple BB processors 934 and multiple RF circuits 935. Although Figure 24 shows an example in which the radio communication interface 933 includes multiple BB processors 934 and multiple circuits 935, the radio communication interface 933 may also include a single BB processor 934 or a single RF circuit 935.

Furthermore, in addition to the cellular communication scheme, the radio communication interface 933 may support types of wireless communication schemes, such as a short-range wireless communication scheme, a near field communication scheme, and a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits included in the radio communication interface 933 (e.g., circuits for different wireless communication schemes).

Each of the antennas 937 includes a single or multiple antenna elements (such as multiple antenna elements included in a MIMO antenna), and is used for the radio communication interface 933 to transmit and receive wireless signals. As shown in Figure 24, the automobile navigation equipment 920 may include multiple antennas 937. Although Figure 24 shows an example in which the automobile navigation equipment 920 includes multiple antennas 937, the automobile navigation equipment 920 may also include a single antenna 937.

Furthermore, the automobile navigation equipment 920 may include an antenna 937 for each wireless communication scheme. In this case, the antenna switch 936 may be omitted from the configuration of the automobile navigation equipment 920.

The battery 938 supplies power to each block of the automobile navigation equipment 920 as shown in Figure 24 via a feeder line, which is partially shown as a dashed line in the figure. The battery 938 accumulates electric power supplied from the vehicle.

In the automobile navigation equipment 920 as shown in Figure 24, in a case that the electronic apparatus 100 described with reference to Figure 1 and the electronic apparatus 1600 described with reference to Figure 16 are implemented as user equipment, the transceiver of the electronic apparatus 100 and electronic apparatus 1600 may be implemented by the radio communication interface 933. At least a part of the function may also be implemented by the processor 921. For example, the processor 921 may obtain the condition sensing information by performing the first processing unit 101 described above with reference to Figure 1, and obtain the predetermined condition sensing information by performing the functions of the fourth processing unit 1601 and the fifth processing unit 1602 described above with reference to Figure 16.

The technology of the present disclosure may also be implemented as an in-vehicle system (or vehicle) 940 including one or more blocks in the automobile navigation equipment 920, the in-vehicle network 941, and the vehicle module 942. The vehicle module 942 generates vehicle data (such as vehicle speed, engine speed, and failure information), and outputs the generated data to the in-vehicle network 941.

The basic principle of the present invention has been described above in conjunction with specific embodiments. However, it should be pointed out that, for those skilled in the art, it could be understood that all or any step or component of the methods and devices of the present invention may be implemented in any computing device (including processors, storage media, etc.) or network of computing devices in the form of hardware, firmware, software, or a combination thereof. This can be achieved by those skilled in the art utilizing their basic circuit design knowledge or basic programming skills after reading the description of the present invention.

Moreover, the present invention also proposes a program product storing a machine-readable instruction code that, when read and executed by a machine, can execute the above-mentioned methods according to the embodiments of the present invention.

Accordingly, a storage medium for carrying the above-mentioned program product storing a machine-readable instruction code is also included in the disclosure of the present invention. The storage medium includes, but is not limited to, a floppy disk, an optical disk, a magneto-optical disk, a memory card, a memory stick, etc.

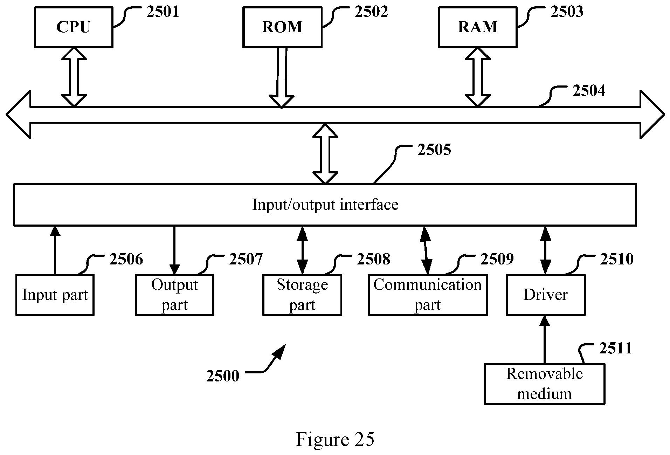

In a case where the present invention is implemented by software or firmware, a program constituting the software is installed from a storage medium or a network to a computer with a dedicated hardware structure (e.g., a general-purpose computer 2500 as shown in Figure 25), and the computer, when installed with various programs, can execute various functions and the like.

In Figure 25, a central processing unit (CPU) 2501 executes various processing in accordance with a program stored in a read only memory (ROM) 2502 or a program loaded from a storage part 2508 to a random access memory (RAM) 2503. In the RAM 2503, data required when the CPU 2501 executes various processing and the like is also stored as needed. The CPU 2501, the ROM 2502, and the RAM 2503 are connected to each other via a bus 2504. The input/output interface 2505 is also connected to the bus 2504.

The following components are connected to the input/output interface 2505: an input part 2506 (including a keyboard, a mouse, etc.), an output part 2507 (including a display, such as a cathode ray tube (CRT), a liquid crystal display (LCD), etc., and a speaker, etc.), a storage part 2508 (including a hard disk, etc.), and a communication part 2509 (including a network interface card such as an LAN card, a modem, etc.). The communication part 2509 executes communication processing via a network such as the Internet. The driver 2510 may also be connected to the input/output interface 2505, as needed. A removable medium 2511 such as a magnetic disk, an optical disk, a magneto-optical disk, a semiconductor memory and the like is installed on the driver 2510 as needed, so that a computer program read out therefrom is installed into the storage part 2508 as needed.

In a case where the above-mentioned series of processing is implemented by software, a program constituting the software is installed from a network such as the Internet or a storage medium such as the removable medium 2511.

Those skilled in the art should understand that, this storage medium is not limited to the removable medium 2511 as shown in Figure 25 which has a program stored therein and which is distributed separately from an apparatus to provide the program to users. Examples of the removable media 2511 include magnetic disks (including a floppy disk (registered trademark)), an optical disk (including a compact disk read-only memory (CD-ROM) and a digital versatile disk (DVD)), a magneto-optical disk (including a mini disk (MD) (registered trademark)), and a semiconductor memory. Alternatively, the storage medium may be the ROM 2502, a hard disk included in the storage part 2508, etc., which have programs stored therein and which are distributed concurrently with the apparatus including them to users.

It should also be pointed out that in the devices, methods and systems of the present invention, each component or each step may be decomposed and/or recombined. These decompositions and/or recombinations should be regarded as equivalent solutions of the present invention. Moreover, the steps of executing the above-mentioned series of processing may naturally be executed in chronological order in the order as described, but do not necessarily need to be executed in chronological order. Some steps may be executed in parallel or independently of each other.

Finally, it should be noted that, the terms "include", "comprise" or any other variants thereof are intended to cover non-exclusive inclusion, so that a process, method, article or apparatus that includes a series of elements not only includes those elements, but also includes other elements that are not explicitly listed, or but also includes elements inherent to such a process, method, article, or apparatus. Furthermore, in the absence of more restrictions, an element defined by sentence "including one..." does not exclude the existence of other identical elements in a process, method, article, or apparatus that includes the element.

Although the embodiments of the present invention have been described above in detail in conjunction with the accompanying drawings, it should be appreciated that, the above-described embodiments are only used to illustrate the present invention and do not constitute a limitation to the present invention. For those skilled in the art, various modifications and changes may be made to the above-mentioned embodiments without departing from the essence and scope of the present invention. Therefore, the scope of the present invention is defined only by the appended claims and equivalent meanings thereof.

This technology can also be implemented as follows.
(1). An electronic apparatus for wireless communications, comprising:
   processing circuitry, configured to:
   obtain, in a manner of an active request or a passive response, condition sensing information about a surrounding condition of the electronic apparatus that is sensed by at least one sensing electronic device .
(2). The electronic apparatus according to (1), wherein the processing circuitry is configured to send the active request to a vehicle networking V2X server that provides services for the electronic apparatus, and obtain fusion sensing information obtained from the V2X server by fusing the condition sensing information fed back from the at least one sensing electronic device .
(3). The electronic apparatus according to (2), wherein the processing circuitry is configured to:
   in a case that the fusion sensing information does not meet a requirement of the electronic apparatus for predetermined condition sensing information, communicate, based on the requirement, with one or more sensing electric devices capable of sensing the predetermined condition sensing information among the at least one sensing electric devices, to obtain the predetermined condition sensing information; and
   integrate the fusion sensing information with the obtained predetermined condition sensing information to obtain integrated condition sensing information, wherein the integrated condition sensing information meets the requirement of the electronic apparatus for the predetermined condition sensing information.
(4). The electronic apparatus according to (1), wherein the processing circuitry is configured to perform the passive response based on sensing capability to the surrounding condition that is broadcasted by the at least one sensing electronic devices, to obtain the condition sensing information from the at least one sensing electronic devices.
(5). The electronic apparatus according to (4), wherein the processing circuitry is configured to establish unicast communication with sensing electronic device(s) that corresponds to the passive response among the at least one sensing electronic devices, and obtain the condition sensing information from the sensing electronic device(s) that corresponds to the passive response.
(6). The electronic apparatus according to (4) or (5), wherein the processing circuitry is configured to:
   in a case that the at least one sensing electronic devices comprise a roadside device that provides service for the electronic apparatus, take condition sensing information sensed by the roadside device as reference sensing information;
   in a case that the reference sensing information does not meet a requirement of the electronic apparatus for predetermined condition sensing information, communicate, based on the requirement, with one or more sensing electric devices capable of sensing the predetermined condition sensing information among the at least one sensing electric devices, to obtain the predetermined condition sensing information; and
   integrate the reference sensing information with the obtained predetermined condition sensing information to obtain integrated condition sensing information, wherein the integrated condition sensing information meets the requirement of the electronic apparatus for the predetermined condition sensing information.
(7). The electronic apparatus according to (4) or (5), wherein the processing circuitry is configured to:
   in a case that the at least one sensing electronic devices do not include a roadside device that provide services for the electronic apparatus, select one or more sensing electronic devices from the at least one sensing electronic device based on the sensing capability broadcasted by the at least one sensing electronic devices and/or a distance to the electronic apparatus, and take condition sensing information sensed by the one or more sensing electronic devices as reference sensing information;,
   in a case that the reference sensing information does not meet the requirement of the electronic apparatus for predetermined condition sensing information, communicate, based on the requirement, with the sensing electronic device capable of sensing the predetermined condition sensing information among the at least one sensing electronic devices to obtain the predetermined condition sensing information;, and
   integrate the reference sensing information with the obtained predetermined condition sensing information to obtain integrated condition sensing information, wherein the integrated condition sensing information meets the requirement of the electronic apparatus for the predetermined condition sensing information.
(8). The electronic apparatus according to any one of (1) to (7), wherein the electronic apparatus comprises an on-board electronic device.
(9). An electronic apparatus used for wireless communications, comprising:
   processing circuitry, configured to:
   take condition sensing information about a surrounding condition of the electronic apparatus that is obtained by an acquisition device as reference sensing information, and in a case that the reference sensing information does not meet a requirement of the electronic apparatus for predetermined condition sensing information, communicate, based on the requirement, with at least one sensing electric device capable of sensing the predetermined condition sensing information, to obtain the predetermined condition sensing information; and
   integrate the obtained predetermined condition sensing information with the reference sensing information to obtain integrated condition sensing information, wherein the integrated condition sensing information meets the requirement of the electronic apparatus for the predetermined condition sensing information.
(10). The electronic apparatus according to (9), wherein,
   in a case that the electronic apparatus is within the coverage of a roadside device, the acquisition device is the roadside device, and condition sensing information sensed by the roadside device is used as the reference sensing information, or
   in a case that the electronic apparatus is not within the coverage range of the roadside device, the acquisition device comprises one or more sensing electronic devices capable of sensing the condition sensing information, and the condition sensing information sensed by the one or more sensing electronic devices is the reference sensing information.
(11). The electronic apparatus according to (10), wherein the processing circuitry is configured to determine the one or more sensing electronic devices based on a sensing capability broadcasted by the sensing electronic device capable of sensing the condition sensing information.
(12). The electronic apparatus according to (10), wherein the processing circuitry is configured to determine the one or more sensing electronic devices based on the distance to the electronic apparatus.
(13). The electronic apparatus according to any one of (12) to (14), wherein the processing circuitry is configured to obtain the reference sensing information from the acquisition device by sending a request for obtaining the reference sensing information to the acquisition device or responding to the sensing capability to a surrounding condition that is broadcasted by the acquisition device.
(14). The electronic apparatus according to (9), wherein,
   in a case that the electronic apparatus is within a service scope of a vehicle networking V2X server, the acquisition device is the V2X server, and the fusion sensing information obtained from the V2X server by fusing the condition sensing information fed back from the sensing electronic device capable of sensing the condition sensing information is the reference sensing information.
(15). The electronic apparatus according to (14), wherein the processing circuitry is configured to send a request for obtaining the reference sensing information to the V2X server, and obtain the reference sensing information from the V2X server.
(16). The electronic apparatus according to any one of (9) to (15), wherein the reference sensing information does not meet a requirement of the electronic apparatus for predetermined condition sensing information, comprises: the quality of the predetermined condition sensing information included in the reference sensing information is lower than a predetermined threshold, or the predetermined condition sensing information is not included in the reference sensing information.
(17). The electronic apparatus according to any one of (9) to (16), wherein integrating the obtaining predetermined condition sensing information with the reference sensing information comprises superimposing the obtaining predetermined condition sensing information and the reference sensing information.
(18). The electronic apparatus according to any one of (9) to (17), wherein the electronic apparatus comprises an on-board electronic device.
(19). A method for wireless communications, comprising:
   obtaining, in a manner of an active request or a passive response, condition sensing information about a surrounding condition of the electronic apparatus that is sensed by at least one sensing electronic devices.
(20). A method for wireless communications, comprising:
   taking condition sensing information about a surrounding condition of an electronic apparatus that is obtained by an acquisition device as reference sensing information, and in a case that the reference sensing information does not meet a requirement of the electronic apparatus for predetermined condition sensing information, communicating, based on the requirement, with at least one sensing electric device capable of sensing the predetermined condition sensing information, to obtain the predetermined condition sensing information; and
   integrating the obtained predetermined condition sensing information with the reference sensing information to obtain integrated condition sensing information, wherein the integrated condition sensing information meets the requirement of the electronic apparatus for the predetermined condition sensing information.
(21). A computer-readable storage medium having computer-executable instructions stored thereon, wherein when the computer-executable instructions are executed, the method for wireless communications according to any one of (19) to (20) is performed.

## Claims

1. An electronic apparatus for wireless communications, comprising:
processing circuitry, configured to:
obtain, in a manner of an active request or a passive response, condition sensing information about a surrounding condition of the electronic apparatus that is sensed by at least one sensing electronic device.

2. The electronic apparatus according to claim 1, wherein the processing circuitry is configured to send the active request to a vehicle networking V2X server that provides services for the electronic apparatus, and obtain fusion sensing information obtained from the V2X server by fusing the condition sensing information fed back from the at least one sensing electronic device.

3. The electronic apparatus according to claim 2, wherein the processing circuitry is configured to:
in a case that the fusion sensing information does not meet a requirement of the electronic apparatus for predetermined condition sensing information, communicate, based on the requirement, with one or more sensing electric devices capable of sensing the predetermined condition sensing information among the at least one sensing electric devices, to obtain the predetermined condition sensing information; and
integrate the fusion sensing information with the obtained predetermined condition sensing information to obtain integrated condition sensing information, wherein the integrated condition sensing information meets the requirement of the electronic apparatus for the predetermined condition sensing information.

4. The electronic apparatus according to claim 1, wherein the processing circuitry is configured to perform the passive response based on sensing capability to the surrounding condition that is broadcasted by the at least one sensing electronic devices, to obtain the condition sensing information from the at least one sensing electronic devices.

5. The electronic apparatus according to claim 4, wherein the processing circuitry is configured to establish unicast communication with sensing electronic device(s) that corresponds to the passive response among the at least one sensing electronic devices, and obtain the condition sensing information from the sensing electronic device(s) that corresponds to the passive response.

6. The electronic apparatus according to claim 4 or 5, wherein the processing circuitry is configured to:
in a case that the at least one sensing electronic devices comprise a roadside device that provides service for the electronic apparatus, take condition sensing information sensed by the roadside device as reference sensing information;
in a case that the reference sensing information does not meet a requirement of the electronic apparatus for predetermined condition sensing information, communicate, based on the requirement, with one or more sensing electric devices capable of sensing the predetermined condition sensing information among the at least one sensing electric devices, to obtain the predetermined condition sensing information; and
integrate the reference sensing information with the obtained predetermined condition sensing information to obtain integrated condition sensing information, wherein the integrated condition sensing information meets the requirement of the electronic apparatus for the predetermined condition sensing information.

7. The electronic apparatus according to claim 4 or 5, wherein the processing circuitry is configured to:
in a case that the at least one sensing electronic devices do not include a roadside device that provides services for the electronic apparatus, select one or more sensing electronic devices from the at least one sensing electronic devices based on the sensing capability broadcasted by the at least one sensing electronic devices and/or a distance to the electronic apparatus, and take condition sensing information sensed by the one or more sensing electronic devices as reference sensing information;
in a case that the reference sensing information does not meet the requirement of the electronic apparatus for predetermined condition sensing information, communicate, based on the requirement, with the sensing electronic device capable of sensing the predetermined condition sensing information among the at least one sensing electronic devices to obtain the predetermined condition sensing information; and
integrate the reference sensing information with the obtained predetermined condition sensing information to obtain integrated condition sensing information, wherein the integrated condition sensing information meets the requirement of the electronic apparatus for the predetermined condition sensing information.

8. The electronic apparatus according to any one of claims 1 to 7, wherein the electronic apparatus comprises an on-board electronic device.

9. An electronic apparatus for wireless communications, comprising:
processing circuitry, configured to:
take condition sensing information about a surrounding condition of the electronic apparatus that is obtained by an acquisition device as reference sensing information, and in a case that the reference sensing information does not meet a requirement of the electronic apparatus for predetermined condition sensing information, communicate, based on the requirement, with at least one sensing electric device capable of sensing the predetermined condition sensing information, to obtain the predetermined condition sensing information; and
integrate the obtained predetermined condition sensing information with the reference sensing information to obtain integrated condition sensing information, wherein the integrated condition sensing information meets the requirement of the electronic apparatus for the predetermined condition sensing information.

10. The electronic apparatus according to claim 9, wherein,
in a case that the electronic apparatus is within the coverage range of a roadside device, the acquisition device is the roadside device, and condition sensing information sensed by the roadside device is taken as the reference sensing information, or
in a case that the electronic apparatus is not within the coverage range of the roadside device, the acquisition device comprises one or more sensing electronic devices capable of sensing the condition sensing information, and the condition sensing information sensed by the one or more sensing electronic devices is the reference sensing information.

11. The electronic apparatus according to claim 10, wherein the processing circuitry is configured to determine the one or more sensing electronic devices based on a sensing capability broadcasted by the sensing electronic device capable of sensing the condition sensing information.

12. The electronic apparatus according to claim 10, wherein the processing circuitry is configured to determine the one or more sensing electronic devices based on a distance to the electronic apparatus.

13. The electronic apparatus according to any one of claims 12 to 14, wherein the processing circuitry is configured to obtain the reference sensing information from the acquisition device by sending a request for obtaining the reference sensing information to the acquisition device or performing response to a sensing capability to a surrounding condition that is broadcasted by the acquisition device.

14. The electronic apparatus according to claim 9, wherein,
in a case that the electronic apparatus is within a service scope of a vehicle networking V2X server, the acquisition device is the V2X server, and fusion sensing information obtained from the V2X server by fusing the condition sensing information fed back from the sensing electronic device capable of sensing the condition sensing information is the reference sensing information.

15. The electronic apparatus according to claim 14, wherein the processing circuitry is configured to send a request for obtaining the reference sensing information to the V2X server, and obtain the reference sensing information from the V2X server.

16. The electronic apparatus according to any one of claims 9 to 15, wherein a case where the reference sensing information does not meet a requirement of the electronic apparatus for predetermined condition sensing information comprises: the quality of the predetermined condition sensing information included in the reference sensing information is lower than a predetermined threshold, or the predetermined condition sensing information is not included in the reference sensing information.

17. The electronic apparatus according to any one of claims 9 to 16, wherein integrating the obtaining predetermined condition sensing information with the reference sensing information comprises superimposing the obtaining predetermined condition sensing information and the reference sensing information.

18. The electronic apparatus according to any one of claims 9 to 17, wherein the electronic apparatus comprises an on-board electronic device.

19. A method for wireless communications, comprising:
obtaining, in a manner of an active request or a passive response, condition sensing information about a surrounding condition of the electronic apparatus that is sensed by at least one sensing electronic devices.

20. A method for wireless communications, comprising:
taking condition sensing information about a surrounding condition of an electronic apparatus that is obtained by an acquisition device as reference sensing information, and in a case that the reference sensing information does not meet a requirement of the electronic apparatus for predetermined condition sensing information, communicating, based on the requirement, with at least one sensing electric device capable of sensing the predetermined condition sensing information, to obtain the predetermined condition sensing information; and
integrating the obtained predetermined condition sensing information with the reference sensing information to obtain integrated condition sensing information, wherein the integrated condition sensing information meets the requirement of the electronic apparatus for the predetermined condition sensing information.

21. A computer-readable storage medium having computer-executable instructions stored thereon, wherein when the computer-executable instructions are executed, the method for wireless communications according to any one of claims 19 to 20 is performed.
